Europäisches Patentamt

European Patent Office

Office européen des brevets

(19)

(11) Publication number: **0 110 566**
A2

(12) # EUROPEAN PATENT APPLICATION

(21) Application number: 83306556.8

(22) Date of filing: 27.10.83

(51) Int. Cl.³: **B 21 D 51/26,** B 21 D 51/38, H 01 G 9/12

(30) Priority: 26.11.82 GB 8233772

(43) Date of publication of application: 13.06.84 Bulletin 84/24

(84) Designated Contracting States: DE FR IT SE

(71) Applicant: STANDARD TELEPHONES AND CABLES PUBLIC LIMITED COMPANY, 190 Strand, London, WC2R 1DU (GB)

(72) Inventor: Adams, Graham Leonard, 22 Ashwood Road, Potters Bar Hertfordshire (GB)

(74) Representative: Laurence, Simon French, S.T.C. Patent Department Edinburgh Way, Harlow Essex CM20 2SH (GB)

(54) Reduction of rupture strength of metal cans.

(57) To guard against explosion, the rupture strength of an electrolytic capacitor can 11 is weakened in a controlled manner by impressing a cruciform partial shear pattern 10 in its base. When the can is subjected to excessive pressure a slow leak initially develops at the centre of the cross, and a further pressure rise is required before the leak rate is augmented by a progressive separation of the quadrants along the shear lines.

EP 0 110 566 A2

REDUCTION OF RUPTURE STRENGTH OF METAL CANS

This invention relates to the reduction of the rupture strength of metal cans made of aluminium or aluminium alloy, and finds particular, though not necessarily exclusive, application to the manufacture of electrolytic capacitor cans.

Under certain circumstances a sealed electrolytic capacitor can generate excessive hydrogen gas pressure, in which case failure to include a safety vent in the capacitor casing could produce catastrophic results. Previously the normal method of venting a capacitor can has been to use a rubber plug which blows at a certain pressure, typically lying in the range 80 to 100 p.s.i. More recently an intrinsically cheaper approach to the problem of venting has been to pattern the can by stamping a set of grooves to create particularly thin regions of the can wall at which it is hoped rupture will be initiated if the pressure within the can exceeds a certain limit. A problem with this particular approach is that a stamping operation is very liable to produce a local work-hardening in the vicinity of the grooves, with the result that it is difficult to get such a can to rupture non-explosively.

In contrast to this approach we have found that providing a partial shear in the wall of an aluminium or aluminium alloy can produces little if any work-hardening. By the term 'partial shear' is meant a cutting operation in which co-operating tooling on opposite sides of the metal layer is used to displace the metal out of the plane of the layer in one direction on one side of the shear line and in the opposite direction on the other, but in which the total displacement is small enough to leave the two sides still connected across the shear line.

According to the present invention there is provided a method of providing a controlled weakening of the rupture strength of a metal can made of aluminium or aluminium alloy, wherein a portion of the can wall is subjected to a pressing operation to generate one or more partial shear lines.

According to a preferred feature of the invention the can wall is subjected to a pressing operation to generate four or more partial shear lines intersecting in a common point.

There follows a description of a capacitor can that has been treated by the method of this invention to provide a controlled weakening of its rupture strength. The description refers to the accompanying drawings in which :

Figure 1 is a perspective view of the capacitor can,

Figure 2 is a cross-sectional sketch showing one profile of partial shear,

Figure 3 is a cross-sectional sketch showing an alternative and preferred profile of partial shear, and

Figure 4 is a part-sectional perspective view of a capacitor can additionally provided with studs for locating the capacitor roll within the can.

It will be appreciated that if two adjacent partial shear lines are physically able to meet at a point, then in the vicinity of that intersection the material within the included angle must be formed by material that has been displaced in the same direction with respect to the median plane. In the vicinity of the intersection the material within the included angle must be proud of the median plane over the whole of that included angle or it must be depressed with respect to the median plane over the whole of that angle. Therefore, if the left hand shear line of an intersecting pair of adjacent partial shear lines has a clockwise sense, producing a depressing of level on the right hand side of the shear line, then the right hand shear line must have a counter clockwise sense, producing a depression of level on the left hand side of that shear line. Thus it can be seen that the number of partial shear lines intersecting at a common point must be an even number.

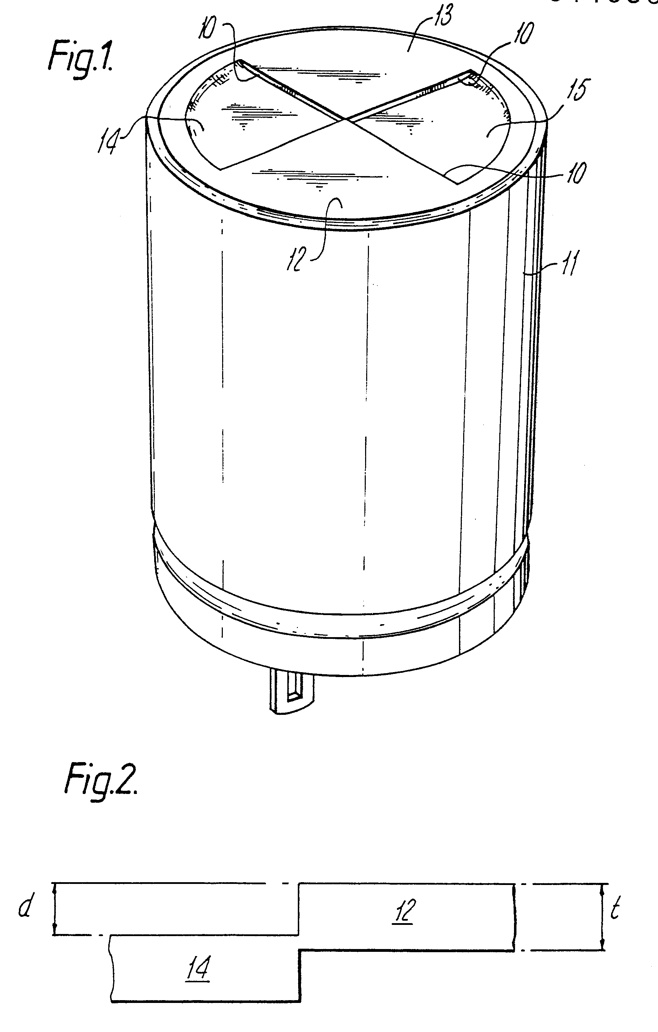

For the present application the preferred number of partial shear lines intersecting at a common point is four, and conveniently these are straight lines and are arranged to meet at right angles as shown in Figure 1, where four partial shear lines 10, that have been formed in the base of an aluminium can 11 for an electrolytic capacitor, intersect to form two raised quadrant sectors 12 and 13, and two depressed quadrant sectors 14 and 15.

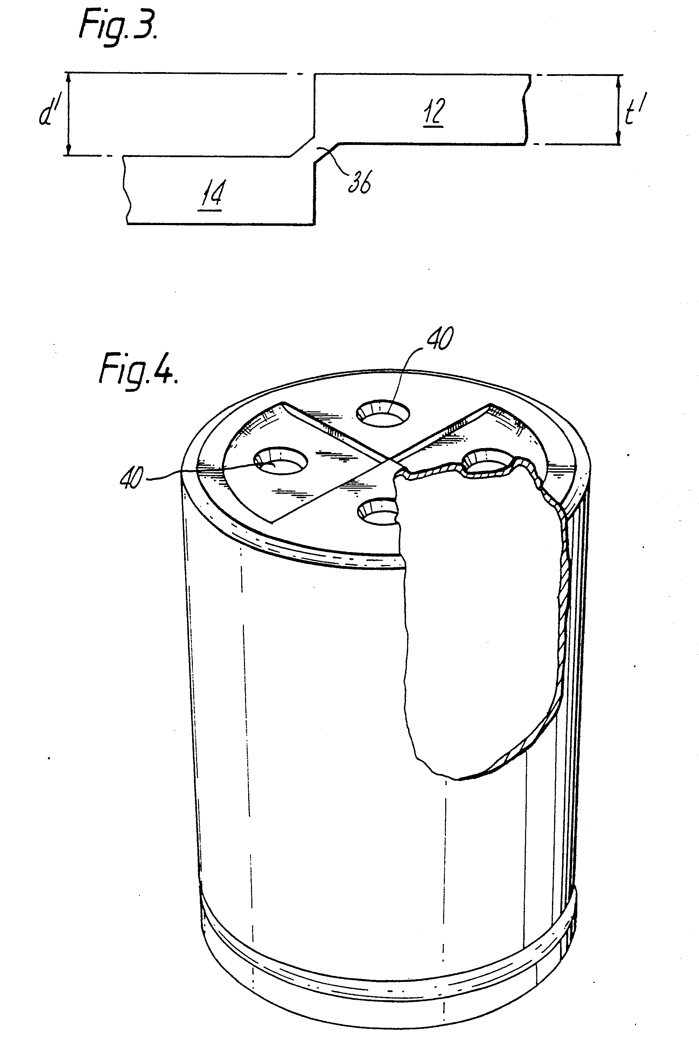

Figure 2 depicts one possible form of partial shear profile. A drawback associated with the use of this profile is that the total relative displacement $d$ produced by the pressing operation has to be very accurately controlled in relation to the thickness $t$ of the can wall in order to give a reproduceable rupture strength. These tolerance requirements are significantly reduced by adopting the profile of Figure 3, which is generated using chamfered tooling, to produce flow regions 30 bridging the metal on the two sides of the shear line, and thereby allowing the total relative displacement $d$ to exceed the can wall thickness $t$, if this is desired.

In a series of venting tests on aluminium cans with thicknesses of 0.031, 0.032, 0.033 and 0.034" the tooling for generating the partial shear lines had a step height of 0.0315", with 45° chamfers on the projecting corners to a depth of 0.006" to provide the flow regions 30. For the initial part of the test the shear displacement was set to 0.033", and then adjustment was made to the press to reduce this to 0.032". In all these tests venting occurred at a pressure of not more than 130 p.s.i. and not less than 80 p.s.i., with a spread of values that masked any differences attributable to the different wall thicknesses and to the different shear displacements.

When the inside of a can was pressurised, the first thing to happen was that the base of the can tended to bow outwardly, eventually resulting in the tearing apart of the thin web linking the raised quadrants 12 and 13. At this stage the seal was broken, allowing a very small escape path for the compressed gas within the can. The leakage rate was increased by increasing the pressure within the can still further and causing progressive tearing of the can along the partial shear lines. The tearing progressed outwardly from the point of intersection of the partial shear lines. In this way venting was found always to occur in a non-explosive way.

In a typical construction of capacitor cans radially directed ribs are provided on the inside of the can base to key into the capacitor roll, hold it steady, and prevent it from rotating. If these ribs were provided in the base of the can of Figure 1 they would leave the effect of producing a significant stiffening of the quadrant sectors 12 to 14. It is preferred therefore, to omit the ribs, and instead to use round dimples 40 (Figure 4). Conveniently the same tooling can be used for generating these dimples and the partial shear lines in a single operation.

- 5 -     0110566

CLAIMS :

1.      A method of providing a controlled weakening of the rupture strength of a metal can made of aluminium or aluminium alloy, characterised in that a portion of the can wall is subjected to a pressing operation to generate one or more partial shear lines.

2.      A method as claimed in claim 1, wherein the or each partial shear line is generated with chamfered tooling providing the partial shear line with a flow region bridging the portions of the can wall on either side of that shear line.

3.      A method as claimed in claim 2, wherein the pressing operation is such that the relative displacement of the portions of the can wall on the two sides of the or each partial shear line is equal to or greater than the thickness of the can wall in which that partial shear line is formed.

4.      A method as claimed in claim 1, 2 or 3, wherein the pressing operation generates four or more partial shear lines intersecting in a common point.

5.      A method as claimed in any preceding claim, wherein the pressing operation additionally generates inwardly directed dimples between pairs of adjacent partial shear lines.

6.      An aluminium or aluminium alloy can whose rupture strength has been weakened by the method claimed in any preceding claim.

7.      A can as claimed in claim 6, wherein the number of partial shear lines is four, and these lines intersect in a common point.

8.      A can as claimed in claim 6 or 7, wherein the partial shear lines are straight.

9.      A can as claimed in claim 6, wherein the partial shear lines are straight and intersect at right angles.

10. An electrolytic capacitor roll mounted in a can as claimed in claim 6, 7, 8 or 9, wherein the can is substantially cylindrical, intersecting partial shear lines are formed in the base of the can, and inwardly directed dimples formed in the base in regions between pairs of adjacent partial shear lines are engaged by the end of the roll.

0110566

Fig.1.

Fig.2.

*Fig.3.*

$d'$

$t'$

12

14

36

*Fig.4.*

40

40